# EUROPEAN PATENT SPECIFICATION

(11) **EP 4 440 160 B1**
(45) Date of publication and mention of the grant of the patent: **31.12.2025**
(21) Application number: 21964478.8
(22) Date of filing: 22.11.2021
(51) Int. Cl.: H04W 4/02, H04W 12/02, H04W 12/63

(54) **COLLABORATIVE RANGING METHOD AND APPARATUS, COMMUNICATION DEVICE AND STORAGE MEDIUM**
KOLLABORATIVES ENTFERNUNGSMESSUNGSVERFAHREN UND -VORRICHTUNG, KOMMUNIKATIONSVORRICHTUNG UND SPEICHERMEDIUM
PROCÉDÉ ET APPAREIL DE TÉLÉMÉTRIE COLLABORATIVE, DISPOSITIF DE COMMUNICATION ET SUPPORT DE STOCKAGE

(43) Date of publication of application: 02.10.2024
(73) Proprietor: Beijing Xiaomi Mobile Software Co., Ltd., Beijing 100085 (CN)
(72) Inventor: LIANG, Haoran, Beijing 100085 (CN); HONG, Wei, Beijing 100085 (CN); SHEN, Yang, Beijing 100085 (CN); LIU, Jianning, Beijing 100085 (CN)
(74) Representative: Dehns Germany Partnerschaft mbB
(86) International application number: PCT/CN2021/132189
(87) International publication number: WO 2023/087329

(56) References cited:
- WO-A1-2020/073161
- CN-A- 105 224 144
- CN-A- 108 513 247
- CN-A- 111 385 794
- CN-A- 111 436 019
- CN-A- 112 205 008
- CN-A- 112 602 357
- CN-A- 112 639 682
- "3rd Generation Partnership Project; Technical Specification Group Services and System Aspects; Study on Enhancement to the 5GC LoCation Services (Release 16)", 3GPP STANDARD; TECHNICAL REPORT; 3GPP TR 23.731, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.0.0, 5 December 2018 (2018-12-05), pages 1 - 171, XP051591036
- HUAWEI: "Addition of a Scheduled Location Time", 3GPP TSG-WG SA2 MEETING #147E, S2-2107681, 11 October 2021 (2021-10-11), XP052062555

## Description

### TECHNICAL FIELD

The present disclosure relates to, but is not limited to, a field of wireless communication technology, and more particularly relates to a method and an apparatus for cooperative ranging, a communication device, and a storage medium.

### BACKGROUND

In a cellular mobile communication system, a ranging service may determine a distance between two user equipment (UE, User Equipment) UEs, and/or a direction between one UE and another UE, via a direct communication connection.

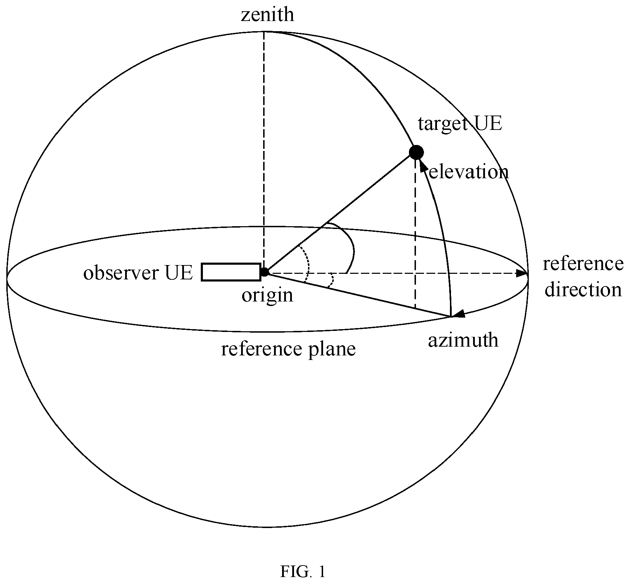

As illustrated in FIG. 1, the observer UE, i.e., a ranging client or a ranging request terminal requesting ranging, has a reference plane and a reference direction. The direction of a target UE to the observer UE is an angle of a line connected between the observer UE and the target UE to the reference direction. It is represented by an azimuth direction and an elevation direction. The azimuth direction of the target UE is the angle formed between the reference direction and a projection of a line from the observer UE to the target UE on the same plane as the reference direction orthogonal to a zenith. The elevation direction of the target UE is an angle above the horizontal plane. Related technologies are known from non-patent document "3rd Generation Partnership Project; Technical Specification Group Services and System Aspects; Study on Enhancement to the 5GC LoCation Services (Release 16)" and WO 2020/073161 A1.

### SUMMARY

The invention is defined by the appended claims. The present invention provides a method and an apparatus for cooperative ranging, a method and an apparatus for transmitting information as defined in the independent the claims. Advantageous embodiments are the subject matter of the dependent claims. Embodiments that do not fall within the scope of the claims should be interpreted as examples useful for understanding the invention.

It should be understood that the above general description and the following detailed description are only exemplary and illustrative and do not limit the embodiments of the present disclosure.

### BRIEF DESCRIPTION OF THE DRAWINGS

The accompanying drawings, which are incorporated into and constitute a part of the description, illustrate embodiments consistent with the present disclosure, and are used to explain the principles of the embodiments of the present disclosure in conjunction with the description.
FIG. 1 is a schematic diagram of a UE ranging illustrated according to an exemplary embodiment;
FIG. 2 is a schematic diagram of a structure of a wireless communication system illustrated according to an exemplary embodiment;
FIG. 3a is a schematic diagram of another UE ranging illustrated according to an exemplary embodiment;
FIG. 3b is a schematic diagram of yet another UE ranging illustrated according to an exemplary embodiment;
FIG. 3c is a schematic diagram of a further UE ranging illustrated according to an exemplary embodiment;
FIG. 4 is a flowchart of a method for cooperative ranging illustrated according to an exemplary embodiment;
FIG. 5 is a flowchart of a method for transmitting information illustrated according to an exemplary embodiment;
FIG. 6 is a flowchart of another method for transmitting information illustrated according to an exemplary embodiment;
FIG. 7 is a schematic diagram of information interaction of cooperative ranging illustrated according to an exemplary embodiment;
FIG. 8 is a flowchart of a method for updating privacy profile information illustrated according to an exemplary embodiment;
FIG. 9 is a block diagram of an apparatus for cooperative ranging illustrated according to an exemplary embodiment;
FIG. 10 is a block diagram of an apparatus for transmitting information illustrated according to an exemplary embodiment;
FIG. 11 is a block diagram of another apparatus for transmitting information illustrated according to an exemplary embodiment;
FIG. 12 is a block diagram of an apparatus for cooperative ranging or transmitting information illustrated according to an exemplary embodiment.

### DETAILED DESCRIPTION

Embodiments will be described here in detail, examples of which are illustrated in the accompanying drawings. When the following description relates to the drawings, the same numerals in different drawings refer to the same or similar elements unless otherwise indicated. The implementations described in the embodiments below are not intended to represent all implementations consistent with this disclosure. Rather, they are only examples of devices and methods consistent with some aspects of the present disclosure as recited in the appended claims.

Terms used in embodiments of the disclosure are merely for describing specific examples and are not intended to limit the embodiments of the disclosure. The singular forms "one", "the", and "this" used in the embodiments of the disclosure and the appended claims are also intended to include a multiple form, unless other meanings are clearly represented in the context. It should also be understood that the term "and/or" used in the disclosure refers to any or all of possible combinations including one or more associated listed items.

It should be understood that although the terms "first", "second", "third", and the like may be adopted in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. The word "if" as used here may be interpreted as "during . . . " or "when . . . " or "in response to determining . . . " depending on the context.

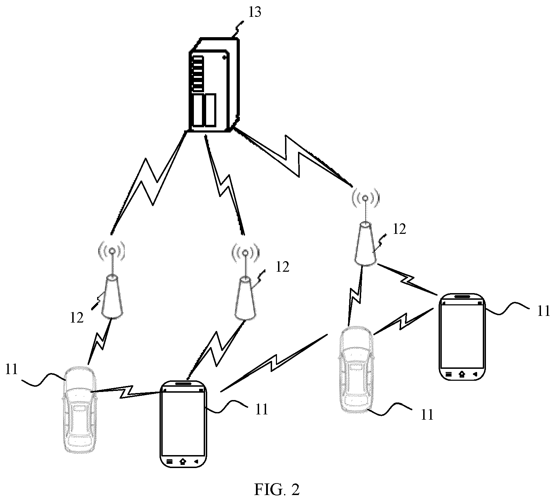

Referring to FIG. 2, a structural schematic diagram of a wireless communication system provided by the embodiments of the present disclosure is illustrated. As shown in FIG. 2, the wireless communication system is a communication system based on cellular mobile communication technology, and the wireless communication system may include several terminals 11 and several base stations 12.

The terminal 11 may refer to a device that provides voice and/or data connectivity to a user. The terminal 11 may communicate with one or more core networks via Radio Access Network (RAN), and the terminal 11 may be an internet of things (IoT) terminal, for example, a sensor device, a mobile telephone (or referred to as a "cellular" telephone) and a computer with an internet of things terminal, or the terminal 11, for example, may be a fixed, portable, pocket-sized, hand-held, computer built-in or on-board apparatus. For example, it is a station (STA), a subscriber unit, a subscriber station, a mobile station, a mobile, a remote station, an access point, a remote terminal, an access terminal, a user terminal, a user agent, a user device or user equipment (UE). Alternatively, the terminal 11 may be an unmanned aerial vehicle device. Alternatively, the terminal 11 may be an on-board device, for example, which may be a vehicle computer with wireless communication function, or may be a wireless communication device of an external vehicle computer. Alternatively, the terminal 11 may be a roadside device, for example, which may be a street lamp, a signal lamp, or other roadside device with a wireless communication function.

The base station 12 may be a network side device in the wireless communication system. The wireless communication system may be a 4th generation mobile communication (4G) technology system, also referred to as a Long Term Evolution (LTE) system; or, the wireless communication system may be a 5G system, also referred to as a new radio (NR) system or a 5G NR system. Alternatively, the wireless communication system may be a next generation system of the 5G system. An access network in the 5G system may be referred to as an NG-RAN (New Generation-Radio Access Network). Alternatively, it is a Machine Type Communication (MTC) system.

The base station 12 may be an evolved base station (eNB) adopted in the 4G system. Alternatively, the base station 12 may be a base station (gNB) with centralized distributed architecture in the 5G system. When adopting the centralized distributed architecture, the base station 12 usually includes a central unit (CU) and at least two distributed units (DUs). The central unit is provided with a protocol stack for a Packet Data Convergence Protocol (PDCP) layer, a Radio Link Control (RLC) protocol layer and a Media Access Control (MAC) layer. The distributed unit is provided with a physical (PHY) layer protocol stack. The specific implementations of the base station 12 are not limited by the embodiments of the present disclosure.

A wireless connection may be established between the base station 12 and the terminal 11 through a wireless air interface. In different implementations, the wireless air interface is a wireless air interface based on the 4th generation mobile communication (4G) network technology standard; or, the wireless air interface is a wireless air interface based on the 5th generation mobile communication (5G) network technology standard, for example, the wireless air interface is new radio; or, the wireless air interface may be a wireless air interface based on a mobile communication network technology standard for a next generation of 5G.

In some embodiments, an end to end (E2E) link may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

Several base stations 12 are connected with the network management device 13, respectively. The network management device 13 may be a core network device in the wireless communication system, for example, the network management device 13 may be a mobility management entity (MME) in an Evolved Packet Core (EPC) network. Alternatively, the network management device may be other core network devices, for example, Serving GateWays (SGWs), Public Data Network GateWays (PGWs), Policy and Charging Rules Function (PCRF) units, Home Subscriber Servers (HSSs) or the like. The implementation forms of the network management device 13 are not limited by the embodiments of the present disclosure.

Execution subjects involved in the embodiments of the present disclosure include, but are not limited to, a UE, for example, a cellular phone terminal in a cellular mobile communication system, and a network side device, for example, an access network device such as a base station, and a core network and the like.

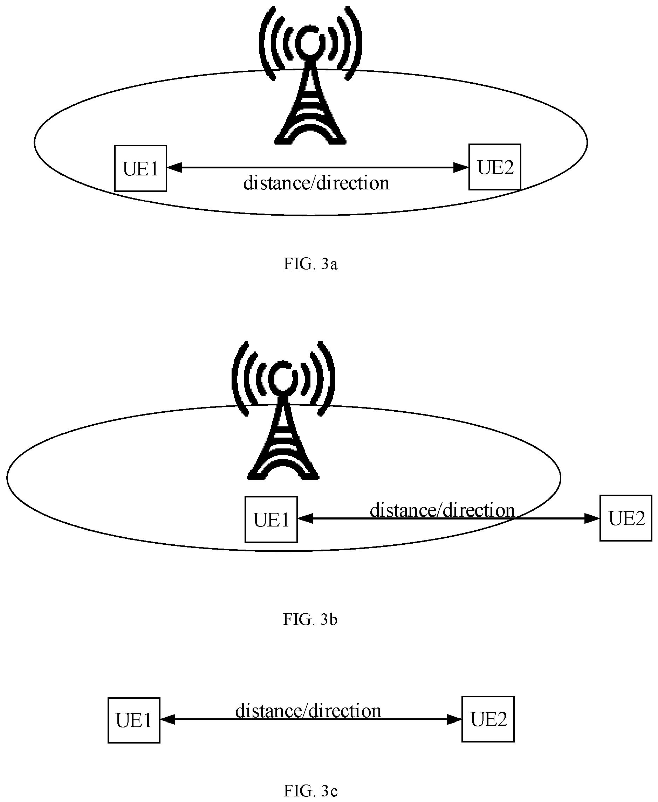

In a 5G cellular mobile communication system, a ranging service may be performed with or without 5G signal coverage. As illustrated in FIG. 3a, both UEs are covered by 5G signal for ranging; as illustrated in FIG. 3b, one of the two UEs is covered by 5G signal for ranging; and as illustrated in FIG. 3c, both of the two UEs are outside the 5G signal coverage for ranging.

In order to improve the ranging accuracy, a cooperative ranging client, i.e., the ranging request terminal, may use cooperative ranging to perform ranging on the target UE. Specifically, the cooperative ranging utilizes a plurality of auxiliary UEs that are different from the ranging request terminal to perform ranging on the same target UE, and a final ranging result is acquired by aggregating these intermediate ranging results.

During the cooperative ranging, the ranging request terminal may acquire high-accuracy distance information and high-accuracy direction information of the target UE without the pertask of the target UE, thus causing location privacy of the target UE to be leaked.

Thus, it is urgent to solve the problem of how to protect the location privacy of the target UE during the cooperative ranging.

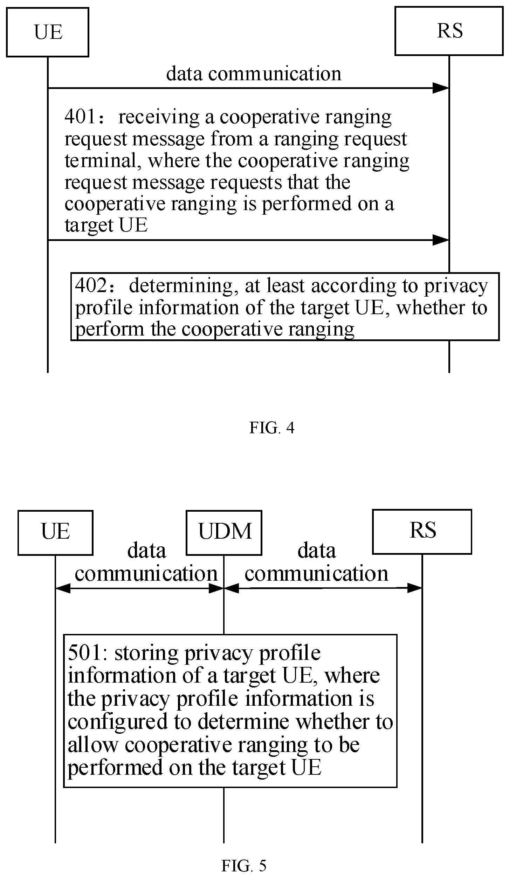

As illustrated in FIG. 4, an exemplary embodiment provides a method for cooperative ranging, the method may be performed by a ranging server RS of a cellular mobile communication system, the method includes:
in step 401: a cooperative ranging request message is received from a ranging request terminal, where the cooperative ranging request message requests that the cooperative ranging is performed on a target user equipment UE;
in step 402: it is determined whether to perform the cooperative ranging at least according to privacy profile information of the target UE.

The embodiment method of the present disclosure may be applied to, but is not limited to, a ranging server RS of a core network. The RS may be configured to manage the ranging service for the UE.

The ranging request terminal may be a UE that requests the ranging to be performed on the target UE to acquire a ranging result, i.e., a relative location relationship, between the ranging request terminal and the target UE. The ranging result herein includes: a distance and/or a direction, and the like.

The ranging request terminal may send a cooperative ranging request to the RS to determine the ranging result with the target UE by means of the cooperative ranging.

Here, the cooperative ranging may include aggregating ranging results between the plurality of auxiliary UEs and the target UE to determine a ranging result between the ranging request terminal and the target UE. For example, a plurality of auxiliary UEs with known locations may be combined to perform the ranging on the target UE, an error in the distances and/or direction values is determined based on the obtained direct distances and/or the direction values between the target UE and the plurality of auxiliary UEs. Then, the distance and/or direction between the ranging request terminal and the target UE are compensated. Moreover, a triangulation manner or the like may also be adopted to determine coordinates of the target UE through the ranging results between the plurality of auxiliary UEs and the target UE, and to correct the distance and/or direction between the ranging request terminal and the target UE.

Since the cooperative ranging combines the ranging results between the plurality of auxiliary UEs and the target UE to determine the ranging result between the ranging request terminal and the target UE, the accuracy of the ranging result between the ranging request terminal and the target UE may be improved.

The privacy profile information of the target UE may be preset in the core network device or may be sent by the target UE to the core network device.

The privacy profile information may be used for the RS to determine whether the cooperative ranging may be performed for the target UE, i.e. whether it is allowed to determine the ranging results between the plurality of auxiliary UEs and the target UE and to aggregate and obtain the ranging result between the ranging request terminal and the target UE.

The privacy profile information may indicate whether it is allowed for performing the cooperative ranging on the target UE, or may indicate a condition for allowing the cooperative ranging to be performed on the target UE, or may indicate a cooperative ranging threshold for not allowing the cooperative ranging to be performed on the target UE, and the like.

In an embodiment, the method further includes.
receiving the privacy profile information of the target UE from a Unified Data Management UDM.

The ranging request terminal sends the cooperative ranging request to the RS to request a cooperative ranging service for ranging the target UE. The RS may acquire the privacy profile information of the target UE from the UDM.

For example, the RS may invoke a Nudm_SDM_Get service operation towards the UDM of the target UE to acquire the privacy profile information of the target UE, and the UDM returns the privacy profile information of the target UE.

In an embodiment, the privacy profile information of the target UE is identified using a Generic Public Subscription Identifier GPSI and/or a Subscriber Permanent Identifier SUPI of the target UE.

The UDM may store the privacy profile information of the target UE in a Unified Data Repository (UDR), and identify the target UE by using an identifier of the target UE, and the identifier of the target UE may include: the GPSI and/or the SUPI.

The cooperative ranging request may include an identifier of the target UE for indicating the target UE for which the cooperative ranging is requested. Upon receiving the cooperative ranging request, the RS may acquire the privacy profile information of the target UE from the UDM based on the identifier of the target UE, and the UDM may return the privacy profile information of the target UE and the identifier of the target UE.

The privacy profile information is identified by the GPSI and/or the SUPI, the privacy profile information of different target UEs may be distinguished, and the confusion of privacy profile information may be reduced. Different target UEs have respective privacy profile information, so as to satisfy different privacy demands of the different target UEs.

In this way, it is determined whether to perform the cooperative ranging on the target UE based on the privacy profile information. Through the control over whether to perform the cooperative ranging on the target UE, the control over the acquisition of the accurate ranging result for the target UE may be achieved, thereby improving the protection of the location privacy of the target UE.

The privacy profile information includes:
a cooperative ranging privacy indication, configured to indicate whether to allow the cooperative ranging to be performed on the target UE.

The cooperative ranging privacy indication may be explicitly indicated by one or more bits. For example, the cooperative ranging privacy indication may occupy one or more bits of the privacy profile information to indicate, by different values, that it is allowed for performing the cooperative ranging on the target UE, or that it is not allowed for performing the cooperative ranging on the target UE.

The cooperative ranging privacy indication may also be implicitly indicated. The privacy profile information may implicitly indicate, by carrying different information, whether it is allowed for performing the cooperative ranging on the target UE.

For example, the privacy profile information may be implicitly indicated by whether to indicate a measurement requirement for performing the cooperative ranging. The measurement requirement may include, for example, specifying a number of auxiliary UEs to perform the cooperative ranging. When the privacy profile information indicates that there is a measurement requirement, it may implicitly indicate that it is allowed for performing the cooperative ranging and that the measurement requirement needs to be met. When the privacy profile information does not indicate the measurement requirement, it may implicitly indicate that it is not allowed for performing the cooperative ranging.

In this way, whether the cooperative ranging is performed on the target UE is controlled through the cooperative ranging privacy indication, so as to achieve the control over the acquisition of the accurate ranging result for the target UE, and thus improves the protection of the location privacy of the target UE.

The privacy profile information is further configured to indicate a measurement requirement for performing the cooperative ranging

The measurement requirement may be a requirement for the measurement result of the cooperative ranging, for example, an accuracy requirement of the measurement result, and the like, may be specified.

The measurement requirement may also be limited based on a location, time, etc., of the target UE.

Here, the measurement requirement may be a requirement for the ranging request terminal, for example, a type requirement for the ranging request terminal, and the like. A ranging request terminal with a specified type may be allowed for performing the cooperative ranging. A type of the ranging request terminal may be grouped in advance, either based on a business type of the ranging request terminal, or based on a geographic location of the ranging request terminal, and the like.

In an embodiment, the determining whether to perform the cooperative ranging at least according to the privacy profile information of the target UE includes one of the following:
in response to that a measurement demand indicated by a cooperative ranging request satisfies the measurement requirement indicated by the privacy profile information, accepting the cooperative ranging request; or
in response to that a measurement demand indicated by a cooperative ranging request does not satisfy the measurement requirement indicated by the privacy profile information, rejecting the cooperative ranging request.

The RS verifies the cooperative ranging request according to the privacy profile information of the target UE.

If the measurement demand indicated by the cooperative ranging request satisfies all the measurement requirements in the privacy profile information, the RS accepts the cooperative ranging request and proceeds with the ranging task. Otherwise, the RS rejects the cooperative ranging request. The decision of the cooperative ranging task may be sent by the RS as a ranging response message.

The RS may send a ranging response message accepting the cooperative ranging request to an AMF, and the AMF initiates the cooperative ranging.

Here, items of the measurement demand may be set according to all the measurement requirements in the privacy profile information. For example, if the measurement requirement has a requirement for a number of auxiliary UEs, a demand for a number of auxiliary UEs may be set in the measurement demand. If the number of auxiliary UEs demanded in the measurement demand is less than or equal to the number of auxiliary UEs defined in the measurement requirement, it may be determined that the measurement demand indicated by the cooperative ranging request satisfies all the measurement requirements in the privacy profile information.

The cooperative ranging request may also not set a measurement demand. When the cooperative ranging request does not set the measurement demand, it may be assumed that the ranging task requested by the cooperative ranging request is performed based on the measurement requirement in the privacy profile information of the target UE.

When the RS accepts the cooperative ranging request, the RS may indicate the AMF to perform the cooperative ranging. The RS may send a response for the cooperative ranging to the AMF, to indicate the AMF to perform the cooperative ranging.

In an embodiment, the measurement requirement indicates at least one of the following:
an area extent of the target UE when the cooperative ranging is allowed;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the target UE needs to be acquired before the cooperative ranging is performed.

The measurement requirement may specify the area extent where the target UE is located when the cooperative ranging is performed. Here, the area extent may be a geographic area, a cell range in which the target UE is located, and the like. When the target UE is within the area extent, the RS may receive the cooperative ranging request, otherwise, the RS may reject the cooperative ranging request.

The time allowed for performing the cooperative ranging may be indicated by a duration and a starting moment allowed for performing the cooperative ranging, or may be indicated by an ending moment and a starting moment allowed for performing the cooperative ranging. When the target UE is within the time allowed for performing the cooperative ranging, the RS may receive the cooperative ranging request, otherwise, the RS may reject the cooperative ranging request.

The number of auxiliary UEs may affect the accuracy of the final measurement result obtained from the cooperative ranging, and thus, the privacy profile information may limit the accuracy of the final measurement result by limiting the number of auxiliary UEs. The number of auxiliary UEs allowed for performing the cooperative ranging may be compared with the number of auxiliary UEs requested in the cooperative ranging request, if the number of auxiliary UEs requested is less than or equal to the number of auxiliary UEs allowed for performing the cooperative ranging, the RS may receive the cooperative ranging request, otherwise, the RS may reject the cooperative ranging request.

The measurement requirement may specify an accuracy of the measurement result for performing the cooperative ranging, and the measurement result may include: a distance and a direction measured by the cooperative ranging. The measurement requirement specifies the accuracy of the measurement result for performing the cooperative ranging, to improve the privacy protection of the target UE. If the accuracy of the request is less than or equal to the accuracy that may be specified by the measurement requirement the RS may receive the cooperative ranging request, otherwise, the RS may reject the cooperative ranging request.

The measurement requirement may also specify whether a consent indication from the target UE need to be acquired before the cooperative ranging is performed. The target UE may be in a case where the cooperative ranging cannot be performed, such as due to a relatively heavy load. Thus, the core network and the like may send information requesting cooperative ranging to the target UE before the cooperative ranging. If the UE returns a consent indication, the RS may receive the cooperative ranging request; otherwise, the RS may reject the cooperative ranging request.

In this way, through the measurement result, the area extent, the measurement time, and the accuracy corresponding to the measurement result of the cooperative ranging are classified and controlled, which improves detailed protection of the location privacy of the UE and enhances information security.

In an embodiment, the method further includes:
in response to determining that the cooperative ranging is performed, acquiring a measurement result obtained by performing the cooperative ranging; and
sending feedback information of the cooperative ranging to the ranging request terminal based on a comparison result between the measurement result and the measurement requirement.

The RS may send a ranging response message accepting the cooperative ranging request to the AMF, and the AMF initiates cooperative ranging.

The RS may receive an intermediate ranging result sent from the ranging client to the RS and an intermediate ranging result sent from the auxiliary UE to the RS, and aggregate the received intermediate ranging results to obtain the measurement result of the cooperative ranging.

Here, the measurement result may be a distance and/or a direction, and may also include: an accuracy of the measurement result, a measurement time, a time for performing the measurement, an area extent of the target UE when the measurement is performed, information about the auxiliary UE involved in the measurement, such as a number of auxiliary UEs, and the like.

The RS may compare the measurement result with the measurement requirement indicated by the privacy profile information. The RS may check whether the measurement result satisfies the measurement requirement in terms of the area extent, the cooperative ranging time, the number of auxiliary UEs, the distance accuracy and the direction accuracy and the like, and give the checking result to determine the feedback information for the measurement request terminal. For example, when the measurement result does not satisfy the measurement requirement, the measurement result may not be sent to the measurement request terminal.

In an embodiment, the sending the feedback information of the cooperative ranging to the ranging request terminal based on the comparison result between the measurement result and the measurement requirement includes at least one of the following:
in response to that the measurement result satisfies the measurement requirement, sending the measurement result to the ranging request terminal; or
in response to that the measurement result does not satisfy the measurement requirement, sending measurement error indication information indicating a cooperative ranging error to the ranging request terminal.

Here, when the measurement result satisfies the measurement requirement, the privacy of the target UE is protected and the measurement result may be sent to the measurement request terminal.

When the measurement result does not satisfy the measurement requirement, the privacy of the target UE is not protected and the measurement error indication information may be sent to the measurement request terminal. The measurement error indication information may indicate that an error occurred in the measurement, or a reason for the error, such as the measurement result not satisfying the measurement requirement, and it may also specifically indicate a specific item in which the measurement result does not satisfy the measurement requirement, for example, the distance accuracy of the measurement result exceeding the distance accuracy of the measurement requirement, and the like.

As illustrated in FIG. 5, an exemplary embodiment provides a method for transmitting information, the method for transmitting information may be performed by a unified data management UDM, and the method includes:
in step 501: privacy profile information of a target User Equipment UE is stored, where the privacy profile information is configured to determine whether to allow cooperative ranging to be performed on the target UE.

The embodiment method of the present disclosure may be used, but is not limited to, a UDM in a core network. The UDM is responsible for managing a user identifier, subscription data, and authentication data, and managing registration of a serving network element of a user in the core network.

The ranging request terminal may be a UE that requests the ranging to be performed on the target UE to acquire a ranging result, i.e., a relative location relationship, between the ranging request terminal and the target UE. The ranging result herein includes: a distance and/or a direction, and the like.

The ranging request terminal may send a cooperative ranging request to the RS to determine the ranging result with the target UE by means of the cooperative ranging.

Here, the cooperative ranging may include aggregating ranging results between the plurality of auxiliary UEs and the target UE to determine a ranging result between the ranging request terminal and the target UE. For example, a plurality of auxiliary UEs with known locations may be combined to perform the ranging on the target UE, an error in the distances and/or direction values is determined based on the obtained direct distances and/or the direction values between the target UE and the plurality of auxiliary UEs. Then, the distance and/or direction between the ranging request terminal and the target UE are compensated. Moreover, a triangulation manner or the like may also be adopted to determine coordinates of the target UE through the ranging results between the plurality of auxiliary UEs and the target UE, and to correct the distance and/or direction between the ranging request terminal and the target UE.

Since the cooperative ranging combines the ranging results between the plurality of auxiliary UEs and the target UE to determine the ranging result between the ranging request terminal and the target UE, the accuracy of the ranging result between the ranging request terminal and the target UE may be improved.

The privacy profile information of the target UE may be preset in the core network device or may be sent by the target UE to the core network device. The privacy profile information may be stored by the UDM. The UDM may store the privacy profile information in the UDR.

The privacy profile information may be used for the RS to determine whether the cooperative ranging may be performed for the target UE, i.e. whether it is allowed to determine the ranging results between the plurality of auxiliary UEs and the target UE and to aggregate and obtain the ranging result between the ranging request terminal and the target UE.

The privacy profile information may indicate whether it is allowed for performing the cooperative ranging on the target UE, or may indicate a condition for allowing the cooperative ranging to be performed on the target UE, or may indicate a cooperative ranging threshold for not allowing the cooperative ranging to be performed on the target UE, and the like.

The privacy profile information includes:
a cooperative ranging privacy indication, configured to indicate whether to allow the cooperative ranging to be performed on the target UE.

The cooperative ranging privacy indication may be explicitly indicated by one or more bits. For example, the cooperative ranging privacy indication may occupy one or more bits of the privacy profile information to indicate, by different values, that it is allowed for performing the cooperative ranging on the target UE, or that it is not allowed for performing the cooperative ranging on the target UE.

The cooperative ranging privacy indication may also be implicitly indicated. The privacy profile information may implicitly indicate, by carrying different information, whether it is allowed for performing the cooperative ranging on the target UE.

For example, the privacy profile information may be implicitly indicated by whether to indicate a measurement requirement for performing the cooperative ranging. The measurement requirement may include, for example, specifying a number of auxiliary UEs to perform the cooperative ranging. When the privacy profile information indicates that there is a measurement requirement, it may implicitly indicate that it is allowed for performing the cooperative ranging and that the measurement requirement needs to be met. When the privacy profile information does not indicate the measurement requirement, it may implicitly indicate that it is not allowed for performing the cooperative ranging.

In this way, whether the cooperative ranging is performed on the target UE is controlled through the cooperative ranging privacy indication, so as to achieve the control over the acquisition of the accurate ranging result for the target UE, and thus improves the protection of the location privacy of the target UE.

The privacy profile information is further configured to indicate a measurement requirement for performing the cooperative ranging

The measurement requirement may be a requirement for the measurement result of the cooperative ranging, for example, an accuracy requirement of the measurement result, and the like, may be specified.

The measurement requirement may also be limited based on a location, time, etc., of the target UE.

Here, the measurement requirement may be a requirement for the ranging request terminal, for example, a type requirement for the ranging request terminal, and the like. A ranging request terminal with a specified type may be allowed for performing the cooperative ranging. A type of the ranging request terminal may be grouped in advance, either based on a business type of the ranging request terminal, or based on a geographic location of the ranging request terminal, and the like.

In an embodiment, the measurement requirement indicates at least one of the following:
an area extent of the target UE when the cooperative ranging is allowed;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the target UE needs to be acquired before the cooperative ranging is performed.

The measurement requirement may specify the area extent where the target UE is located when the cooperative ranging is performed. Here, the area extent may be a geographic area, a cell range in which the target UE is located, and the like. When the target UE is within the area extent, the RS may receive the cooperative ranging request, otherwise, the RS may reject the cooperative ranging request.

The time allowed for performing the cooperative ranging may be indicated by a duration and a starting moment allowed for performing the cooperative ranging, or may be indicated by an ending moment and a starting moment allowed for performing the cooperative ranging. When the target UE is within the time allowed for performing the cooperative ranging, the RS may receive the cooperative ranging request, otherwise, the RS may reject the cooperative ranging request.

The number of auxiliary UEs may affect the accuracy of the final measurement result obtained from the cooperative ranging, and thus, the privacy profile information may limit the accuracy of the final measurement result by limiting the number of auxiliary UEs. The number of auxiliary UEs allowed for performing the cooperative ranging may be compared with the number of auxiliary UEs requested in the cooperative ranging request, if the number of auxiliary UEs requested is less than or equal to the number of auxiliary UEs allowed for performing the cooperative ranging, the RS may receive the cooperative ranging request, otherwise, the RS may reject the cooperative ranging request.

The measurement requirement may specify an accuracy of the measurement result for performing the cooperative ranging, and the measurement result may include: a distance and a direction measured by the cooperative ranging. The measurement requirement specifies the accuracy of the measurement result for performing the cooperative ranging, to improve the privacy protection of the target UE. If the accuracy of the request is less than or equal to the accuracy that may be specified by the measurement requirement the RS may receive the cooperative ranging request, otherwise, the RS may reject the cooperative ranging request.

The measurement requirement may also specify whether a consent indication from the target UE need to be acquired before the cooperative ranging is performed. The target UE may be in a case where the cooperative ranging cannot be performed, such as due to a relatively heavy load. Thus, the core network and the like may send information requesting cooperative ranging to the target UE before the cooperative ranging. If the UE returns a consent indication, the RS may receive the cooperative ranging request; otherwise, the RS may reject the cooperative ranging request.

In this way, through the measurement result, the area extent, the measurement time, and the accuracy corresponding to the measurement result of the cooperative ranging are classified and controlled, which improves detailed protection of the location privacy of the UE and enhances information security.

In an embodiment, the method further includes.
sending, based on a request from a Ranging Server RS, the privacy profile information of the target UE to the RS.

The ranging request terminal sends a cooperative ranging request to the RS to request a cooperative ranging service for ranging the target UE. The RS may request to acquire the privacy profile information of the target UE from the UDM.

The privacy profile information may be configured by the target UE based on its own privacy demand. The target UE may configure the privacy profile information based on its own privacy demand, or a preset privacy demand, and the like. The target UE may determine whether to allow the cooperative ranging based on its own load condition, and the like.

The privacy profile information may be uploaded by the UE to the core network and stored by the UDM. The privacy profile information may also be preset in the core network according to the communication protocol and stored in the UDR by the UDM.

For example, the RS may invoke a Nudm_SDM_Get service operation towards the UDM of the target UE to acquire the privacy profile information of the target UE, and the UDM returns the privacy profile information of the target UE.

In an embodiment, the method further includes.
updating the privacy profile information based on update information from the target UE.

The UE may update its own privacy profile information when the load, service, and the like of the UE changes. The UE may send the update information to the core network, and the UDM may update the privacy profile information based on the update information.

In an embodiment, the update information, is at least configured to update the cooperative ranging privacy indication in the privacy profile information, where cooperative ranging privacy indication is configured to indicate whether to allow the cooperative ranging to be performed on the target UE.

The update information may update the cooperative ranging privacy indication, i.e., it is switched between allowing the cooperative ranging to be performed on the target UE and not allowing the cooperative ranging to be performed on the target UE.

In an embodiment, the privacy profile information of the target UE is identified using a Generic Public Subscription Identifier GPSI and/or a Subscriber Permanent Identifier SUPI of the target UE.

The UDM may store the privacy profile information of the target UE in the UDR, and identify the target UE by using an identifier of the target UE, and the identifier of the target UE may include: the GPSI and/or the SUPI.

The cooperative ranging request may include an identifier of the target UE for indicating the target UE for which the cooperative ranging is requested. Upon receiving the cooperative ranging request, the RS may acquire the privacy profile information of the target UE from the UDM based on the identifier of the target UE, and the UDM may return the privacy profile information of the target UE and the identifier of the target UE.

The privacy profile information is identified by the GPSI and/or the SUPI, the privacy profile information of different target UEs may be distinguished, and the confusion of privacy profile information may be reduced. Different target UEs have respective privacy profile information, so as to satisfy different privacy demands of the different target UEs.

In this way, it is determined whether to perform the cooperative ranging on the target UE based on the privacy profile information. Through the control over whether to perform the cooperative ranging on the target UE, the control over the acquisition of the accurate ranging result for the target UE may be achieved, thereby improving the protection of the location privacy of the target UE.

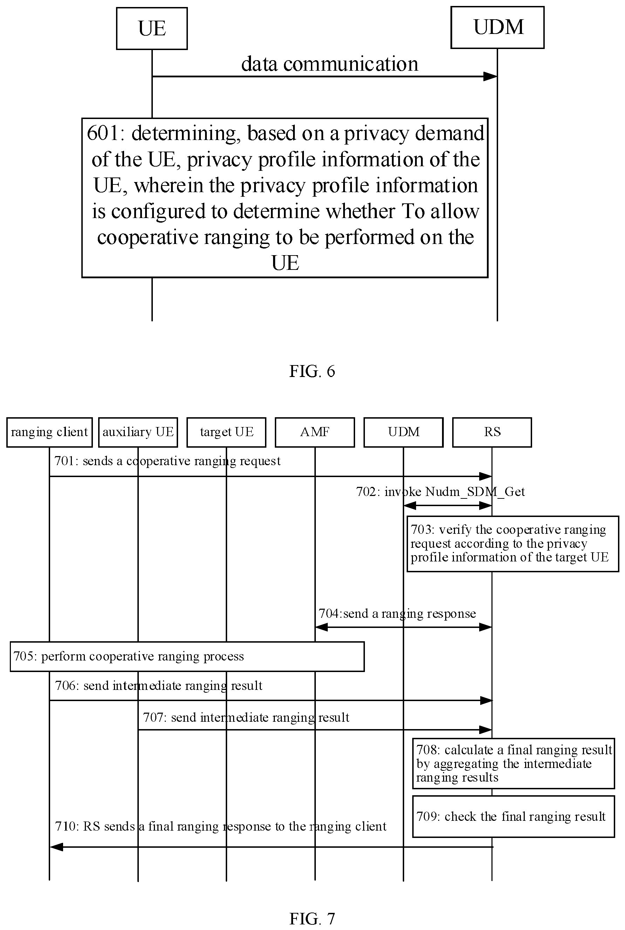

As illustrated in FIG. 6, an exemplary embodiment provides a method for transmitting information, the method for transmitting information may be performed by a UE of a cellular mobile communication system, and the method includes:
in step 601: based on a privacy demand of the UE, privacy profile information of the UE is determined, where the privacy profile information is configured to determine whether to allow cooperative ranging to be performed on the UE.

The embodiment methods of the present disclosure may be used in, but are not limited to, the UE of the cellular mobile communication.

In the cooperative ranging, generally, a ranging request terminal requests that cooperative ranging is performed on the target UE. The ranging request terminal may be a UE that requests the ranging to be performed on the target UE to acquire a ranging result, i.e., a relative location relationship, between the ranging request terminal and the target UE. The ranging result herein includes: a distance and/or a direction, and the like.

The ranging request terminal may send a cooperative ranging request to the RS to determine the ranging result with the target UE by means of the cooperative ranging.

Here, the cooperative ranging may include aggregating ranging results between the plurality of auxiliary UEs and the target UE to determine a ranging result between the ranging request terminal and the target UE. For example, a plurality of auxiliary UEs with known locations may be combined to perform the ranging on the target UE, an error in the distances and/or direction values is determined based on the obtained direct distances and/or the direction values between the target UE and the plurality of auxiliary UEs. Then, the distance and/or direction between the ranging request terminal and the target UE are compensated. Moreover, a triangulation manner or the like may also be adopted to determine coordinates of the target UE through the ranging results between the plurality of auxiliary UEs and the target UE, and to correct the distance and/or direction between the ranging request terminal and the target UE.

Since the cooperative ranging combines the ranging results between the plurality of auxiliary UEs and the target UE to determine the ranging result between the ranging request terminal and the target UE, the accuracy of the ranging result between the ranging request terminal and the target UE may be improved.

The privacy profile information of the target UE may be preset in the core network device or may be sent by the target UE to the core network.

The privacy profile information may be set by the UE based on its own privacy demand. The privacy demand may be determined based on the service handled by the UE, the load condition, and the like. The privacy profile information may be used to limit the privacy information during the cooperative ranging process.

The privacy profile information may be used for the RS to determine whether the cooperative ranging may be performed for the target UE, i.e. whether it is allowed to determine the ranging results between the plurality of auxiliary UEs and the target UE and to aggregate and obtain the ranging result between the ranging request terminal and the target UE.

The privacy profile information may indicate whether it is allowed for performing the cooperative ranging on the target UE, or may indicate a condition for allowing the cooperative ranging to be performed on the target UE, or may indicate a cooperative ranging threshold for not allowing the cooperative ranging to be performed on the target UE, and the like.

In this way, whether the cooperative ranging is performed on the target UE is controlled through the cooperative ranging privacy indication, so as to achieve the control over the acquisition of the accurate ranging result for the target UE, and thus improves the protection of the location privacy of the target UE.

The privacy profile information includes:
a cooperative ranging privacy indication, configured to indicate whether to allow the cooperative ranging to be performed on the target UE.

The cooperative ranging privacy indication may be explicitly indicated by one or more bits. For example, the cooperative ranging privacy indication may occupy one or more bits of the privacy profile information to indicate, by different values, that it is allowed for performing the cooperative ranging on the target UE, or that it is not allowed for performing the cooperative ranging on the target UE.

The cooperative ranging privacy indication may also be implicitly indicated. The privacy profile information may implicitly indicate, by carrying different information, whether it is allowed for performing the cooperative ranging on the target UE.

For example, the privacy profile information may be implicitly indicated by whether to indicate a measurement requirement for performing the cooperative ranging. The measurement requirement may include, for example, specifying a number of auxiliary UEs to perform the cooperative ranging. When the privacy profile information indicates that there is a measurement requirement, it may implicitly indicate that it is allowed for performing the cooperative ranging and that the measurement requirement needs to be met. When the privacy profile information does not indicate the measurement requirement, it may implicitly indicate that it is not allowed for performing the cooperative ranging.

In this way, whether the cooperative ranging is performed on the target UE is controlled through the cooperative ranging privacy indication, so as to achieve the control over the acquisition of the accurate ranging result for the target UE, and thus improves the protection of the location privacy of the target UE.

The privacy profile information is further configured to indicate a measurement requirement for performing the cooperative ranging.

The measurement requirement may be a requirement for the measurement result of the cooperative ranging, for example, an accuracy requirement of the measurement result, and the like, may be specified.

The measurement requirement may also be limited based on a location, time, etc., of the target UE.

Here, the measurement requirement may be a requirement for the ranging request terminal, for example, a type requirement for the ranging request terminal, and the like. A ranging request terminal with a specified type may be allowed for performing the cooperative ranging. A type of the ranging request terminal may be grouped in advance, either based on a business type of the ranging request terminal, or based on a geographic location of the ranging request terminal, and the like.

In an embodiment, the measurement requirement indicates at least one of the following:
an area extent of the UE when the cooperative ranging is allowed;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the UE needs to be acquired before the cooperative ranging is performed.

The measurement requirement may specify the area extent where the target UE is located when the cooperative ranging is performed. Here, the area extent may be a geographic area, a cell range in which the target UE is located, and the like. When the target UE is within the area extent, the RS may receive the cooperative ranging request, otherwise, the RS may reject the cooperative ranging request.

The time allowed for performing the cooperative ranging may be indicated by a duration and a starting moment allowed for performing the cooperative ranging, or may be indicated by an ending moment and a starting moment allowed for performing the cooperative ranging. When the target UE is within the time allowed for performing the cooperative ranging, the RS may receive the cooperative ranging request, otherwise, the RS may reject the cooperative ranging request.

The number of auxiliary UEs may affect the accuracy of the final measurement result obtained from the cooperative ranging, and thus, the privacy profile information may limit the accuracy of the final measurement result by limiting the number of auxiliary UEs. The number of auxiliary UEs allowed for performing the cooperative ranging may be compared with the number of auxiliary UEs requested in the cooperative ranging request, if the number of auxiliary UEs requested is less than or equal to the number of auxiliary UEs allowed for performing the cooperative ranging, the RS may receive the cooperative ranging request, otherwise, the RS may reject the cooperative ranging request.

The measurement requirement may specify an accuracy of the measurement result for performing the cooperative ranging, and the measurement result may include: a distance and a direction measured by the cooperative ranging. The measurement requirement specifies the accuracy of the measurement result for performing the cooperative ranging, to improve the privacy protection of the target UE. If the accuracy of the request is less than or equal to the accuracy that may be specified by the measurement requirement the RS may receive the cooperative ranging request, otherwise, the RS may reject the cooperative ranging request.

The measurement requirement may also specify whether a consent indication from the target UE need to be acquired before the cooperative ranging is performed. The target UE may be in a case where the cooperative ranging cannot be performed, such as due to a relatively heavy load. Thus, the core network and the like may send information requesting cooperative ranging to the target UE before the cooperative ranging. If the UE returns a consent indication, the RS may receive the cooperative ranging request; otherwise, the RS may reject the cooperative ranging request.

In this way, through the measurement result, the area extent, the measurement time, and the accuracy corresponding to the measurement result of the cooperative ranging are classified and controlled, which improves detailed protection of the location privacy of the UE and enhances information security.

In an embodiment, the method further includes:
sending update information to a core network, where the update information is configured to update the privacy profile information stored by a Unified Data Management UDM.

The UE may update its own privacy profile information when the load, service, and the like of the UE changes. The UE may send the update information to the core network, and the UDM may update the privacy profile information based on the update information.

In an embodiment, the update information, is at least configured to update the cooperative ranging privacy indication in the privacy profile information, where cooperative ranging privacy indication is configured to indicate whether to allow the cooperative ranging to be performed on the UE.

The update information may update the cooperative ranging privacy indication, i.e., it is switched between allowing the cooperative ranging to be performed on the target UE and not allowing the cooperative ranging to be performed on the target UE.

In an embodiment, the sending the update information to the core network includes:
sending a NAS message carrying the update information.

The update information may be carried in an N1 NAS message to be sent to the core network. Here, the N1 NAS message refers to, an NAS message sent through that direct N1 interface between the UE and the core network.

In an embodiment, in response to that the UE is a ranging request terminal, the method further includes:
sending a cooperative ranging request for a target UE to a ranging server, where the cooperative ranging request is configured to indicate a measurement demand for performing the cooperative ranging.

The ranging request terminal may send the cooperative ranging request to the RS when the ranging request terminal needs to perform the ranging on the target UE. The cooperative ranging request may indicate the target UE for the cooperative ranging, the measurement demand for performing the cooperative ranging, and the like.

For example, the measurement demand may include at least one of the following:
an area extent of the target UE when the cooperative ranging is performed;
a time for performing the cooperative ranging;
a number of auxiliary UEs for performing the cooperative ranging;
a distance accuracy for performing the cooperative ranging;
a direction accuracy for performing the cooperative ranging;
when the RS receives the cooperative ranging request, it may determine, based on the privacy profile information, whether the cooperative ranging is performed on the target UE.

The RS verifies the cooperative ranging request according to the privacy profile information of the target UE.

If the measurement demand indicated by the cooperative ranging request satisfies all the measurement requirements in the privacy profile information, the RS accepts the cooperative ranging request and proceeds with the ranging task. Otherwise, the RS rejects the cooperative ranging request. The decision of the cooperative ranging task may be sent by the RS as a ranging response message.

The RS may send a ranging response message accepting the cooperative ranging request to an AMF, and the AMF initiates the cooperative ranging.

Here, items of the measurement demand may be set according to all the measurement requirements in the privacy profile information. For example, if the measurement requirement has a requirement for a number of auxiliary UEs, a demand for a number of auxiliary UEs may be set in the measurement demand. If the number of auxiliary UEs demanded in the measurement demand is less than or equal to the number of auxiliary UEs defined in the measurement requirement, it may be determined that the measurement demand indicated by the cooperative ranging request satisfies all the measurement requirements in the privacy profile information.

The cooperative ranging request may also not set a measurement demand. When the cooperative ranging request does not set the measurement demand, it may be assumed that the ranging task requested by the cooperative ranging request is performed based on the measurement requirement in the privacy profile information of the target UE.

When the RS accepts the cooperative ranging request, the RS may indicate the AMF to perform the cooperative ranging. The RS may send a response for the cooperative ranging to the AMF, to indicate the AMF to perform the cooperative ranging.

A specific example is provided below in conjunction with any of the above embodiments:
A file of the privacy profile information is stored in the UDM. For each target UE, the privacy profile information determines whether the ranging client (i.e., the ranging request terminal) may acquire distance and direction information about the target UE through the cooperative ranging service. The privacy profile information includes the cooperative ranging privacy indication, the ranging geographic area, the ranging time, the number of auxiliary UEs, the ranging distance accuracy restriction, and the ranging direction accuracy restriction, and the like.

The cooperative ranging privacy indication (CRPI) indicates whether the ranging result of the target UE may be obtained through the collaboration among the ranging client and the auxiliary UEs. The CRPI also defines whether the target UE requires to be consented before being ranged.

The ranging geographic area indicates an area extent in which the target UE allows to be ranged.

The ranging time indicates a time period during which the target UE allows to be ranged.

The number of auxiliary UEs restriction indicates a maximum number of auxiliary UEs that may participate in the cooperative ranging process. Typically, the higher the number of auxiliary UEs, the higher the accuracy of the final ranging result.

The ranging accuracy restriction indicates a maximum accuracy of the ranging distance allowed by the target UE.

The ranging direction accuracy restriction indicates a maximum accuracy of the ranging allowed by the target UE.

As described in FIG. 7, specific steps for preforming the cooperative ranging using the privacy profile information include:
in step 701: the ranging client sends a cooperative ranging request to a ranging server (RS), to request a cooperative ranging service for ranging the target UE. The RS may subscribe with the UDM of the target UE to obtain the privacy profile information of the target UE. The cooperative ranging request may include the measurement requirement, such as the ranging geographic area, the ranging time period, the ranging distance accuracy, the ranging direction accuracy, and the like.
   The ranging geographic area indicates an area of the ranging task;
   The ranging time period indicates a time period of the ranging task;
   The ranging accuracy indicates a required accuracy of the ranging distance;
   The ranging direction accuracy indicates a required accuracy of the ranging direction;
in step 702: the RS invokes a Nudm_SDM_Get service operation towards the UDM of the target UE to get the privacy profile information of the target UE identified by the GPSI or SUPI. The UDM returns the privacy profile information of the target UE and the SUPI of the target UE;
in step 703: the RS verifies the cooperative ranging request according to the privacy profile information of the target UE. If all the requirements in the privacy profile information are satisfied, the RS accepts the cooperative ranging request and proceeds with the ranging task. Otherwise, the RS rejects the cooperative ranging request. The decision on the cooperative ranging task is sent by the RS as a ranging response message;
in step 704: the RS sends a ranging response to the AMF.
in step 705: the AMF starts the cooperative ranging process;
in step 706: the ranging client sends an intermediate ranging result to the RS;
in step 707: the auxiliary UEs send the intermediate ranging results to the RS;
in step 708: the RS calculates the final ranging result by aggregating the intermediate ranging results;
in step 709: the RS checks whether the final ranging result fits the privacy profile information in terms of the ranging geographic area, the ranging time period, the maximum number of auxiliary UEs, the ranging distance accuracy restriction and the ranging direction accuracy restriction. When all the restrictions are satisfied, the RS sends the final ranging result to the ranging client. Otherwise, the RS sends back an error message;
in step 710: the RS sends a final ranging response to the ranging client.

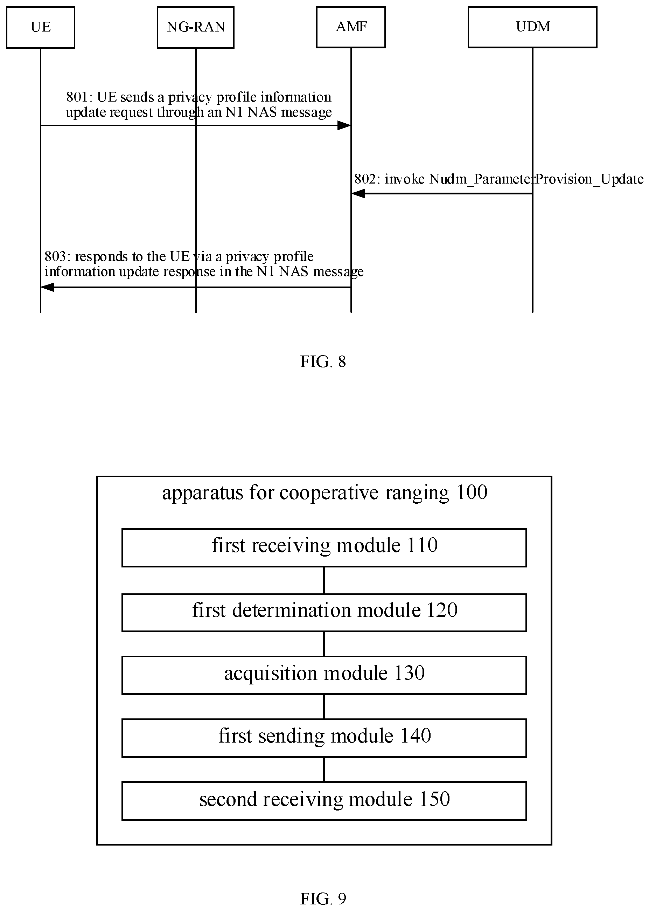

As described in FIG. 8, specific steps for the target UE to update the privacy profile information include:
in step 801: the UE sends an updated CRPI (e.g., switching from on to off) to the AMF via a privacy profile information update request in the N1 NAS message.
in step 802: the AMF invokes a Nudm_ParameterProvision_Update service operation towards the UDM. The UDM updates the privacy profile information of the UE in the UDR by invoking the Nudr_DM_Update (SUPI, Subscription Data) service operation accordingly (e.g. disallow the cooperative ranging process for the UE).
in step 803: the AMF responds to the UE via a privacy profile information update response in the N1 NAS message.

The embodiments of the present disclosure also provide an apparatus for cooperative ranging, as illustrated in FIG. 9, applied in an RS of the cellular mobile wireless communication, where the apparatus 100 includes:
a first receiving module 110, configured to receiving a cooperative ranging request message from a ranging request terminal, where the cooperative ranging request message requests that the cooperative ranging is performed on a target UE; and
a first determination module 120, configured to determine whether to perform the cooperative ranging at least according to privacy profile information of the target UE.

The privacy profile information includes:
a cooperative ranging privacy indication, configured to indicate whether to allow the cooperative ranging to be performed on the target UE.

The privacy profile information is further configured to indicate a measurement requirement for performing the cooperative ranging.

In an embodiment, the measurement requirement indicates at least one of the following:
an area extent of the target UE when the cooperative ranging is allowed;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the target UE needs to be acquired before the cooperative ranging is performed.

In an embodiment, the first determination module 120 is specifically configured to at least one of the following:
in response to that a measurement demand indicated by a cooperative ranging request satisfies the measurement requirement indicated by the privacy profile information, accept the cooperative ranging request; or
in response to that a measurement demand indicated by a cooperative ranging request does not satisfy the measurement requirement indicated by the privacy profile information, reject the cooperative ranging request.

In an embodiment, the apparatus 100 further includes:
an acquisition module 130, configured to acquire a measurement result obtained by performing the cooperative ranging in response to determining that the cooperative ranging is performed;
a first sending module 140, configured to send feedback information of the cooperative ranging to the ranging request terminal based on a comparison result between the measurement result and the measurement requirement.

In an embodiment, the first sending module 140 is specifically configured to at least one of the following:
in response to that the measurement result satisfies the measurement requirement, send the measurement result to the ranging request terminal; or
in response to that the measurement result does not satisfy the measurement requirement, send measurement error indication information indicating a cooperative ranging error to the ranging request terminal.

In an embodiment, the apparatus further includes:
a second receiving module 150, configured to the privacy profile information of the target UE from a UDM.

In an embodiment, the privacy profile information of the target UE is identified using a Generic Public Subscription Identifier GPSI and/or a Subscriber Permanent Identifier SUPI of the target UE.

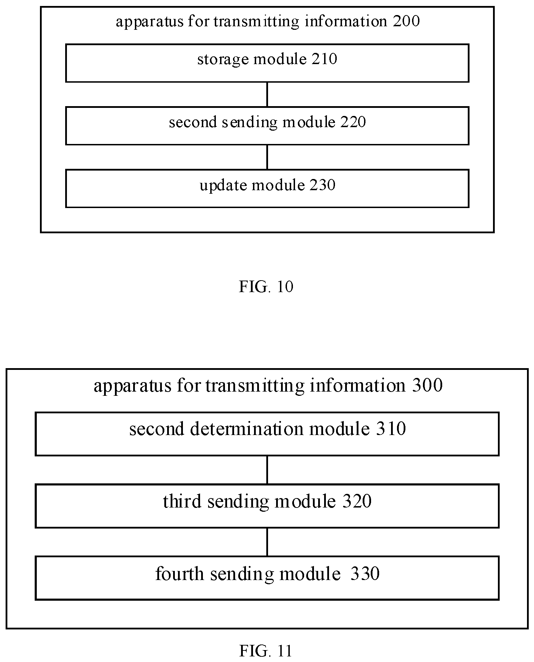

The embodiments of the present disclosure further provides an apparatus for transmitting information, as illustrated in FIG. 10, the apparatus is applied in a UDM of the cellular mobile wireless communication, and the apparatus 200 includes:
a storage module 210, configured to store privacy profile information of a target UE, where the privacy profile information is configured to determine whether to allow cooperative ranging to be performed on the target UE.

The privacy profile information includes:
a cooperative ranging privacy indication, configured to indicate whether to allow the cooperative ranging to be performed on the target UE.

The privacy profile information is further configured to indicate a measurement requirement for performing the cooperative ranging.

In an embodiment, the measurement requirement indicates at least one of the following:
an area extent of the target UE when the cooperative ranging is allowed;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the target UE needs to be acquired before the cooperative ranging is performed.

In an embodiment, the apparatus 200 further includes:
a second sending module 220, configured to send the privacy profile information of the target UE to a Ranging Server RS based on a request from the RS.

In an embodiment, the apparatus 200 further includes:
an update module 230, configured to update the privacy profile information based on update information from the target UE.

In an embodiment, the update information is at least configured to update a cooperative ranging privacy indication in the privacy profile information, where the cooperative ranging privacy indication is configured to indicate whether to allow the cooperative ranging to be performed on the target UE.

In an embodiment, the privacy profile information of the target UE is identified using a Generic Public Subscription Identifier GPSI and/or a Subscriber Permanent Identifier SUPI of the target UE.

The embodiments of the present disclosure further provides an apparatus for transmitting information, as illustrated in FIG. 11, the apparatus is applied in a UE of the cellular mobile wireless communication, and the apparatus 300 includes:
a second determination module 310, configured to determine, based on a privacy demand of a UE, privacy profile information of the UE, where the privacy profile information is configured to determine whether to allow cooperative ranging to be performed on the UE.

The privacy profile information includes:
a cooperative ranging privacy indication, configured to indicate whether to allow the cooperative ranging to be performed on the UE.

The privacy profile information is further configured to indicate a measurement requirement for performing the cooperative ranging.

In an embodiment, the measurement requirement indicates at least one of the following:
an area extent of the UE when the cooperative ranging is allowed;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the UE needs to be acquired before the cooperative ranging is performed.

In an embodiment, the apparatus 300 further includes:
a third sending module 320, configured to send update information to a core network, where the update information is configured to update the privacy profile information stored by a Unified Data Management UDM.

In an embodiment, the update information is at least configured to update a cooperative ranging privacy indication in the privacy profile information, where the cooperative ranging privacy indication is configured to indicate whether to allow the cooperative ranging to be performed on the UE.

In an embodiment, the third sending module 320 is specifically configured to:
send a NAS message carrying the update information.

In an embodiment, in response to that the UE is a ranging request terminal, the apparatus further includes:
a fourth sending module 330, configured to send a cooperative ranging request for a target UE to a ranging server, where the cooperative ranging request is configured to indicate a measurement demand for performing the cooperative ranging.

In the exemplary embodiments, the first receiving module 110, the first determination module 120, the acquisition module 130, the first sending module 140, the second receiving module 150, the storage module 210, the second sending module 220, the update module 230, the second determination module 310, the third sending module 320, the fourth sending module 330, and the like may be implemented by one or more than one central processing units (CPU), graphics processing units (GPU), baseband processors (BP), application specific integrated circuits (ASIC), DSPs, programmable logic devices (PLD), complex programmable logic devices (CPLD), field-programmable gate arrays (FPGA), general-purpose processors, controllers, micro controller units (MCU), microprocessors or other electronic elements for executing the above method.

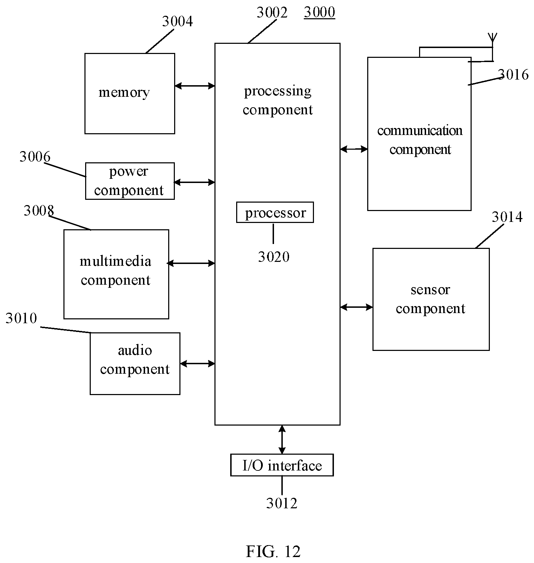

FIG. 12 is a block diagram of an apparatus 3000 for cooperative ranging or transmitting information illustrated according to an exemplary embodiment. For example, the apparatus 3000 may be a mobile phone, a computer, a digital broadcast terminal, a messaging transceiving device, a game console, a tablet device, a medical device, a fitness facility, a personal digital assistant and the like.

Referring to FIG. 12, the apparatus 3000 may include one or more components as follows: a processing component 3002, a memory 3004, a power component 3006, a multimedia component 3008, an audio component 3010, an input/output (I/O) interface 3012, a sensor component 3014 and a communication component 3016.

The processing component 3002 generally controls whole operation of the apparatus 3000, such as operations related to display, phone call, data communication, camera operation and recording operation. The processing component 3002 may include one or more processors 3020for executing instructions so as to complete all or part of steps of the above method. Besides, the processing component 3002 may include one or more modules to facilitate interaction between the processing component 3002 and the other components. For example, the processing component 3002 may include a multimedia module so as to facilitate interaction between the multimedia component 3008 and the processing component 3002.

The memory 3004 is configured to store various types of data so as to support operation on the apparatus 3000. Examples of these data include instructions of any application program or method for operation on the apparatus 3000, contact person data, telephone directory data, messages, pictures, videos and the like. The memory 3004 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disc.

The power component 3006 provides power for various components of the apparatus 3000. The power component 3006 may include a power management system, one or more power sources, and other components related to power generation, management and distribution for the apparatus 3000.

The multimedia component 3008 includes a screen which provides an output interface between the apparatus 3000 and a user. In some examples, the screen may include a liquid crystal display (LCD) and a touch panel (TP). If the screen includes the touch panel, the screen may be implemented as a touch screen so as to receive an input signal from the user. The touch panel includes one or more touch sensors so as to sense touching, swiping and gestures on the touch panel. The touch sensor can not only sense a boundary of a touching or swiping action, but also detect duration and pressure related to touching or swiping operation. In some examples, the multimedia component 3008 includes a front camera and/or a back camera. When the apparatus 3000 is in an operation mode, such as a photographing mode or a video mode, the front camera and/or the back camera can receive external multimedia data. Each front camera and each back camera may be a fixed optical lens system or have a focal length and an optical zoom capability.

The audio component 3010 is configured to output and/or input an audio signal. For example, the audio component 3010 includes a microphone (MIC). When the apparatus 3000 is in the operation mode, such as a call mode, a recording mode and a voice recognition mode, the microphone is configured to receive an external audio signal. The received audio signal may be further stored in the memory 3004 or sent via the communication component 3016. In some examples, the audio component 3010 further includes a speaker for outputting the audio signal.

The I/O interface 3012 provides an interface between the processing component 3002 and a peripheral interface module, and the above peripheral interface module may be a keyboard, a click wheel, buttons and the like. These buttons may include but are not limited to: a home button, a volume button, a start button and a lock button.

The sensor component 3014 includes one or more sensors, configured to provide state evaluation of various aspects for the apparatus 3000. For example, the sensor component 3014 may detect a start/shut-down state of the apparatus 3000 and relative positioning of the components, for example, the components are a display and a keypad of the apparatus 3000. The sensor component 3014 may further detect location change of the apparatus 3000 or one component of the apparatus 3000, whether there is contact between the user and the apparatus 3000, azimuth or speed up/speed down of the apparatus 3000 and temperature change of the apparatus 3000. The sensor component 3014 may include a proximity sensor, configured to detect existence of a nearby object without any physical contact. The sensor component 3014 may further include an optical sensor, such as a CMOS or CCD image sensor, for use in imaging application. In some examples, the sensor component 3014 may further include an acceleration sensor, a gyroscope sensor, a magnetic sensor, a pressure sensor or a temperature sensor.

The communication component 3016 is configured to facilitate wired or wireless communication between the apparatus 3000 and other devices. The apparatus 3000 may be accessed to a wireless network based on a communication standard, such as Wi-Fi, 2G or 3G, or their combination. In an example, the communication component 3016 receives a broadcast signal or broadcast-related information from an external broadcast management system via a broadcast channel In an example, the communication component 3016 further includes a near-field communication (NFC) module so as to facilitate short-range communication. For example, the NFC module may be implemented based on a radio frequency identification (RFID) technology, an infra-red data association (IrDA) technology, an ultra wide band (UWB) technology, a Bluetooth (BT) technology and other technologies.

In an example, the apparatus 3000 may be implemented by one or more than one application specific integrated circuits (ASIC), digital signal processors (DSP), digital signal processing devices (DSPD), programmable logic devices (PLD), field-programmable gate arrays (FPGA), controllers, micro control units, microprocessors or other electronic elements for executing the above method.

In an example, a non-transitory computer-readable storage medium including instructions is further provided, such as a memory 3004 including the instructions. The above instructions may be executed by the processor 3020 of apparatus 3000 so as to complete the above method. For example, the non-transitory computer-readable storage medium may be an ROM, a random access memory (RAM), a CD-ROM, a magnetic tape, a floppy disk, an optical data storage device and the like.

The present disclosure intends to cover any transformation, uses or adaptive change of the examples of the present disclosure which conforms to a general principle of the examples of the present disclosure and includes common general knowledge or conventional technical means which are not disclosed by the examples of the present disclosure in the technical field. The specification and the examples are regarded as examples.

## Claims

1. A method for cooperative ranging, performed by a Ranging Server, RS, comprising:
receiving (401) a cooperative ranging request from a ranging request terminal, wherein the cooperative ranging request requests that the cooperative ranging is performed on a target User Equipment, UE; and
determining (402), at least according to privacy profile information of the target UE, whether to perform the cooperative ranging;
**characterized in that** the privacy profile information comprises:
a cooperative ranging privacy indication, configured to indicate whether to allow the cooperative ranging to be performed on the target UE;
wherein the privacy profile information is further configured to indicate a measurement requirement for performing the cooperative ranging.

2. The method according to claim 1, wherein the measurement requirement indicates at least one of:
an area extent of the target UE allowed for performing the cooperative ranging;
a time allowed for performing the cooperative ranging;
a number of auxiliary UEs allowed for performing the cooperative ranging;
a distance accuracy allowed for performing the cooperative ranging;
a direction accuracy allowed for performing the cooperative ranging; or
whether a consent indication from the target UE needs to be acquired before the cooperative ranging is performed.

3. The method according to claim 1 or 2, wherein the determining whether to perform the cooperative ranging at least according to the privacy profile information of the target UE comprises one of:
accepting, in response to that a measurement demand indicated by the cooperative ranging request satisfies the measurement requirement indicated by the privacy profile information, the cooperative ranging request; or
rejecting, in response to that the measurement demand indicated by the cooperative ranging request does not satisfy the measurement requirement indicated by the privacy profile information, the cooperative ranging request.

4. The method according to any one of claims 1 to 3, further comprising:
acquiring, in response to determining that the cooperative ranging is performed, a measurement result obtained by performing the cooperative ranging; and
sending, based on a comparison result between the measurement result and the measurement requirement, feedback information of the cooperative ranging to the ranging request terminal;
preferably, wherein the sending the feedback information of the cooperative ranging to the ranging request terminal based on the comparison result between the measurement result and the measurement requirement comprises at least one of:
sending, in response to that the measurement result satisfies the measurement requirement, the measurement result to the ranging request terminal; or
sending, in response to that the measurement result does not satisfy the measurement requirement, measurement error indication information indicating a cooperative ranging error to the ranging request terminal.

5. The method according to any one of claims 1 to 4, further comprising:
receiving the privacy profile information of the target UE from a Unified Data Management, UDM;
wherein the privacy profile information of the target UE is identified using at least one of: a Generic Public Subscription Identifier, GPSI, of the target UE; or a Subscriber Permanent Identifier, SUPI, of the target UE.

6. A method for transmitting information, performed by a Unified Data Management, UDM, comprising:
storing (501) privacy profile information of a target User Equipment, UE, wherein the privacy profile information is configured to determine whether to allow cooperative ranging to be performed on the target UE;
**characterized in that** the privacy profile information comprises:
a cooperative ranging privacy indication, configured to indicate whether to allow the cooperative ranging to be performed on the target UE;
wherein the privacy profile information is further configured to indicate a measurement requirement for performing the cooperative ranging.

7. The method according to claim 6, further comprising:
sending, based on a request from a Ranging Server, RS, the privacy profile information of the target UE to the RS.

8. The method according to claim 6 or 7, further comprising:
updating, based on update information from the target UE, the privacy profile information;
wherein the update information is at least configured to update the cooperative ranging privacy indication in the privacy profile information.

9. A method for transmitting information, performed by a User Equipment, UE, comprising:
determining (601), based on a privacy demand of the UE, privacy profile information of the UE, wherein the privacy profile information is configured to determine whether to allow cooperative ranging to be performed on the UE;
**characterized in that** the privacy profile information comprises:
a cooperative ranging privacy indication, configured to indicate whether to allow the cooperative ranging to be performed on the UE;
wherein the privacy profile information is further configured to indicate a measurement requirement for performing the cooperative ranging.

10. The method according to claim 9, further comprising:
sending update information to a core network, wherein the update information is configured to update the privacy profile information stored by a Unified Data Management, UDM;
wherein the update information is at least configured to update the cooperative ranging privacy indication in the privacy profile information;
preferably, sending a Non Access Stratum, NAS, message carrying the update information.

11. The method according to claim 9 or 10, wherein in response to that the UE is a ranging request terminal, the method further comprises:
sending a cooperative ranging request for a target UE to a ranging server, wherein the cooperative ranging request is configured to indicate a measurement demand for performing the cooperative ranging.

12. An apparatus for cooperative ranging, comprising:
a first receiving module (110), configured to receiving a cooperative ranging request sent from a ranging request terminal, wherein the cooperative ranging request requests that the cooperative ranging is performed on a target User Equipment, UE; and
a first determination module (120), configured to determine whether to perform the cooperative ranging at least according to privacy profile information of the target UE;
**characterized in that** the privacy profile information comprises:
a cooperative ranging privacy indication, configured to indicate whether to allow the cooperative ranging to be performed on the target UE;
wherein the privacy profile information is further configured to indicate a measurement requirement for performing the cooperative ranging.

13. An apparatus for transmitting information, comprising:
a storage module (210), configured to store privacy profile information of a target User Equipment, UE, wherein the privacy profile information is configured to determine whether to allow cooperative ranging to be performed on the target UE;
**characterized in that** the privacy profile information comprises:
a cooperative ranging privacy indication, configured to indicate whether to allow the cooperative ranging to be performed on the target UE;
wherein the privacy profile information is further configured to indicate a measurement requirement for performing the cooperative ranging.

14. An apparatus for transmitting information, comprising:
a second determination module (310), configured to determine, based on a privacy demand of a user equipment, UE, privacy profile information of the UE, wherein the privacy profile information is configured to determine whether to allow cooperative ranging to be performed on the UE;
**characterized in that** the privacy profile information comprises:
a cooperative ranging privacy indication, configured to indicate whether to allow the cooperative ranging to be performed on the UE;
wherein the privacy profile information is further configured to indicate a measurement requirement for performing the cooperative ranging.

## Patentansprüche

1. Verfahren zur kooperativen Entfernungsmessung, durchgeführt von einem Entfernungsmessungsserver, RS, umfassend:
Empfangen (401) einer Anfrage zur kooperativen Entfernungsmessung von einem Entfernungsmessungsanforderungsendgerät, wobei die Anfrage zur kooperativen Entfernungsmessung anfordert, dass die kooperative Entfernungsmessung an einem Ziel-Benutzergerät, UE, durchgeführt wird; und
Bestimmen (402), zumindest gemäß Datenschutzprofilinformationen des Ziel-UE, ob die kooperative Entfernungsmessung durchgeführt werden soll;
**dadurch gekennzeichnet, dass** die Datenschutzprofilinformationen umfassen:
eine kooperative Entfernungsmessungs-Datenschutzangabe, die konfiguriert ist, um anzuzeigen, ob die kooperative Entfernungsmessung am Ziel-UE durchgeführt werden darf;
wobei die Datenschutzprofilinformationen ferner konfiguriert sind, um eine Messanforderung für die Durchführung der kooperativen Entfernungsmessung anzuzeigen.

2. Verfahren nach Anspruch 1, wobei die Messanforderung zumindest eines der folgenden angibt: ein Gebietsausmaß des Ziel-UE, das für die Durchführung der kooperativen Entfernungsmessung erlaubt ist;
eine Zeit, die für die Durchführung der kooperativen Entfernungsmessung erlaubt ist;
eine Anzahl von Hilfs-UEs, die für die Durchführung der kooperativen Entfernungsmessung erlaubt sind;
eine Entfernungsgenauigkeit, die für die Durchführung der kooperativen Entfernungsmessung erlaubt ist;
eine Richtungsgenauigkeit, die für die Durchführung der kooperativen Entfernungsmessung erlaubt ist; oder
ob eine Zustimmungsangabe vom Ziel-UE vor der Durchführung der kooperativen Entfernungsmessung erworben werden muss.

3. Verfahren nach Anspruch 1 oder 2, wobei das Bestimmen, ob die kooperative Entfernungsmessung zumindest gemäß den Datenschutzprofilinformationen des Ziel-UE durchgeführt werden soll, eines der folgenden umfasst:
Annehmen der Anfrage zur kooperativen Entfernungsmessung als Reaktion darauf, dass eine durch die Anfrage zur kooperativen Entfernungsmessung angegebene Messanforderung die durch die Datenschutzprofilinformationen angegebene Messanforderung erfüllt; oder
Ablehnen der Anfrage zur kooperativen Entfernungsmessung als Reaktion darauf, dass die durch die Anfrage zur kooperativen Entfernungsmessung angegebene Messanforderung die durch die Datenschutzprofilinformationen angegebene Messanforderung nicht erfüllt.

4. Verfahren nach einem der Ansprüche 1 bis 3, ferner umfassend:
Erwerben eines Messergebnisses, das durch Durchführung der kooperativen Entfernungsmessung erhalten wird, als Reaktion auf die Bestimmung, dass die kooperative Entfernungsmessung durchgeführt wird; und
Senden von Rückmeldeinformationen der kooperativen Entfernungsmessung an das Entfernungsmessungsanforderungsendgerät basierend auf einem Vergleichsergebnis zwischen dem Messergebnis und der Messanforderung; vorzugsweise,
wobei das Senden der Rückmeldeinformationen der kooperativen Entfernungsmessung an das Entfernungsmessungsanforderungsendgerät basierend auf dem Vergleichsergebnis zwischen dem Messergebnis und der Messanforderung zumindest eines der folgenden umfasst:
Senden des Messergebnisses an das Entfernungsmessungsanforderungsendgerät als Reaktion darauf, dass das Messergebnis die Messanforderung erfüllt; oder
Senden von Messfehlerangabeinformationen, die einen Fehler bei der kooperativen Entfernungsmessung anzeigen, an das Entfernungsmessungsanforderungsendgerät als Reaktion darauf, dass das Messergebnis die Messanforderung nicht erfüllt.

5. Verfahren nach einem der Ansprüche 1 bis 4, ferner umfassend:
Empfangen der Datenschutzprofilinformationen des Ziel-UE von einer Unified Data Management, UDM; wobei die Datenschutzprofilinformationen des Ziel-UE unter Verwendung von zumindest einem der folgenden identifiziert werden: einer Generic Public Subscription Identifier, GPSI, des Ziel-UE; oder einer Subscriber Permanent Identifier, SUPI, des Ziel-UE.

6. Verfahren zur Informationsübertragung, durchgeführt von einer Unified Data Management, UDM, umfassend:
Speichern (501) von Datenschutzprofilinformationen eines Ziel-Benutzergeräts, UE, wobei die Datenschutzprofilinformationen konfiguriert sind, um zu bestimmen, ob die kooperative Entfernungsmessung am Ziel-UE durchgeführt werden darf;
**dadurch gekennzeichnet, dass** die Datenschutzprofilinformationen umfassen:
eine kooperative Entfernungsmessungs-Datenschutzangabe, die konfiguriert ist, um anzuzeigen, ob die kooperative Entfernungsmessung am Ziel-UE durchgeführt werden darf;
wobei die Datenschutzprofilinformationen ferner konfiguriert sind, um eine Messanforderung für die Durchführung der kooperativen Entfernungsmessung anzuzeigen.

7. Verfahren nach Anspruch 6, ferner umfassend:
Senden der Datenschutzprofilinformationen des Ziel-UE an den RS basierend auf einer Anfrage von einem Entfernungsmessungsserver, RS.

8. Verfahren nach Anspruch 6 oder 7, ferner umfassend:
Aktualisieren der Datenschutzprofilinformationen basierend auf Aktualisierungsinformationen vom Ziel-UE;
wobei die Aktualisierungsinformationen zumindest konfiguriert sind, um die kooperative Entfernungsmessungs-Datenschutzangabe in den Datenschutzprofilinformationen zu aktualisieren.

9. Verfahren zur Informationsübertragung, durchgeführt von einem Benutzergerät, UE, umfassend:
Bestimmen (601) von Datenschutzprofilinformationen des UE basierend auf einer Datenschutzanforderung des UE, wobei die Datenschutzprofilinformationen konfiguriert sind, um zu bestimmen, ob die kooperative Entfernungsmessung am UE durchgeführt werden darf;
**dadurch gekennzeichnet, dass** die Datenschutzprofilinformationen umfassen:
eine kooperative Entfernungsmessungs-Datenschutzangabe, die konfiguriert ist, um anzuzeigen, ob die kooperative Entfernungsmessung am UE durchgeführt werden darf;
wobei die Datenschutzprofilinformationen ferner konfiguriert sind, um eine Messanforderung für die Durchführung der kooperativen Entfernungsmessung anzuzeigen.

10. Verfahren nach Anspruch 9, ferner umfassend:
Senden von Aktualisierungsinformationen an ein Kernnetz, wobei die Aktualisierungsinformationen konfiguriert sind, um die von einer Unified Data Management, UDM, gespeicherten Datenschutzprofilinformationen zu aktualisieren;
wobei die Aktualisierungsinformationen zumindest konfiguriert sind, um die kooperative Entfernungsmessungs-Datenschutzangabe in den Datenschutzprofilinformationen zu aktualisieren;
vorzugsweise Senden einer Non Access Stratum, NAS, Nachricht, die die Aktualisierungsinformationen trägt.

11. Verfahren nach Anspruch 9 oder 10, wobei als Reaktion darauf, dass das UE ein Entfernungsmessungsanforderungsendgerät ist, das Verfahren ferner umfasst:
Senden einer Anfrage zur kooperativen Entfernungsmessung für ein Ziel-UE an einen Entfernungsmessungsserver, wobei die Anfrage zur kooperativen Entfernungsmessung konfiguriert ist, um eine Messanforderung für die Durchführung der kooperativen Entfernungsmessung anzuzeigen.

12. Vorrichtung zur kooperativen Entfernungsmessung, umfassend:
ein erstes Empfangsmodul (110), das konfiguriert ist, um eine von einem Entfernungsmessungsanforderungsendgerät gesendete Anfrage zur kooperativen Entfernungsmessung zu empfangen, wobei die Anfrage zur kooperativen Entfernungsmessung anfordert, dass die kooperative Entfernungsmessung an einem Ziel-Benutzergerät, UE, durchgeführt wird; und
ein erstes Bestimmungsmodul (120), das konfiguriert ist, um zu bestimmen, ob die kooperative Entfernungsmessung zumindest gemäß Datenschutzprofilinformationen des Ziel-UE durchgeführt werden soll;
**dadurch gekennzeichnet, dass** die Datenschutzprofilinformationen umfassen:
eine kooperative Entfernungsmessungs-Datenschutzangabe, die konfiguriert ist, um anzuzeigen, ob die kooperative Entfernungsmessung am Ziel-UE durchgeführt werden darf;
wobei die Datenschutzprofilinformationen ferner konfiguriert sind, um eine Messanforderung für die Durchführung der kooperativen Entfernungsmessung anzuzeigen.

13. Vorrichtung zur Informationsübertragung, umfassend:
ein Speichermodul (210), das konfiguriert ist, um Datenschutzprofilinformationen eines Ziel-Benutzergeräts, UE, zu speichern, wobei die Datenschutzprofilinformationen konfiguriert sind, um zu bestimmen, ob die kooperative Entfernungsmessung am Ziel-UE durchgeführt werden darf;
**dadurch gekennzeichnet, dass** die Datenschutzprofilinformationen umfassen:
eine kooperative Entfernungsmessungs-Datenschutzangabe, die konfiguriert ist, um anzuzeigen, ob die kooperative Entfernungsmessung am Ziel-UE durchgeführt werden darf;
wobei die Datenschutzprofilinformationen ferner konfiguriert sind, um eine Messanforderung für die Durchführung der kooperativen Entfernungsmessung anzuzeigen.

14. Vorrichtung zur Informationsübertragung, umfassend:
ein zweites Bestimmungsmodul (310), das konfiguriert ist, um basierend auf einer Datenschutzanforderung eines Benutzergeräts, UE, Datenschutzprofilinformationen des UE zu bestimmen, wobei die Datenschutzprofilinformationen konfiguriert sind, um zu bestimmen, ob die kooperative Entfernungsmessung am UE durchgeführt werden darf;
**dadurch gekennzeichnet, dass** die Datenschutzprofilinformationen umfassen:
eine kooperative Entfernungsmessungs-Datenschutzangabe, die konfiguriert ist, um anzuzeigen, ob die kooperative Entfernungsmessung am UE durchgeführt werden darf;
wobei die Datenschutzprofilinformationen ferner konfiguriert sind, um eine Messanforderung für die Durchführung der kooperativen Entfernungsmessung anzuzeigen.

## Revendications

1. Procédé de télémétrie coopérative, exécuté par un Serveur de Télémétrie, RS, comprenant :
recevoir (401) d'une demande de télémétrie coopérative en provenance d'un terminal de demande de télémétrie, dans lequel la demande de télémétrie coopérative demande que la télémétrie coopérative soit effectuée sur un Équipement Utilisateur cible, UE ; et
déterminer (402), au moins selon des informations de profil de confidentialité de l'UE cible, s'il faut effectuer la télémétrie coopérative ;
**caractérisé en ce que** les informations de profil de confidentialité comprennent :
une indication de confidentialité de télémétrie coopérative, configurée pour indiquer s'il faut autoriser la télémétrie coopérative à être effectuée sur l'UE cible ;
dans lequel les informations de profil de confidentialité sont en outre configurées pour indiquer une exigence de mesure pour effectuer la télémétrie coopérative.

2. Procédé selon la revendication 1, dans lequel l'exigence de mesure indique au moins l'un des éléments suivants :
une étendue de zone de l'UE cible autorisée pour effectuer la télémétrie coopérative ;
un temps autorisé pour effectuer la télémétrie coopérative ;
un nombre d'UE auxiliaires autorisés pour effectuer la télémétrie coopérative ;
une précision de distance autorisée pour effectuer la télémétrie coopérative ; une précision de direction autorisée pour effectuer la télémétrie coopérative ;
ou si une indication de consentement de l'UE cible doit être acquise avant que la télémétrie coopérative ne soit effectuée.

3. Procédé selon la revendication 1 ou 2, dans lequel la détermination s'il faut effectuer la télémétrie coopérative au moins selon les informations de profil de confidentialité de l'UE cible comprend l'un des éléments suivants :
l'acceptation, en réponse au fait qu'une demande de mesure indiquée par la demande de télémétrie coopérative satisfait l'exigence de mesure indiquée par les informations de profil de confidentialité, de la demande de télémétrie coopérative ; ou
le rejet, en réponse au fait que la demande de mesure indiquée par la demande de télémétrie coopérative ne satisfait pas l'exigence de mesure indiquée par les informations de profil de confidentialité, de la demande de télémétrie coopérative.

4. Procédé selon l'une quelconque des revendications 1 à 3, comprenant en outre :
l'acquisition, en réponse à la détermination que la télémétrie coopérative est effectuée, d'un résultat de mesure obtenu en effectuant la télémétrie coopérative ; et
l'envoi, sur la base d'un résultat de comparaison entre le résultat de mesure et l'exigence de mesure, d'informations de rétroaction de la télémétrie coopérative au terminal de demande de télémétrie ;
de préférence, dans lequel l'envoi des informations de rétroaction de la télémétrie coopérative au terminal de demande de télémétrie sur la base du résultat de comparaison entre le résultat de mesure et l'exigence de mesure comprend au moins l'un des éléments suivants :
l'envoi, en réponse au fait que le résultat de mesure satisfait l'exigence de mesure, du résultat de mesure au terminal de demande de télémétrie ; ou l'envoi, en réponse au fait que le résultat de mesure ne satisfait pas l'exigence de mesure, d'informations d'indication d'erreur de mesure indiquant une erreur de télémétrie coopérative au terminal de demande de télémétrie.

5. Procédé selon l'une quelconque des revendications 1 à 4, comprenant en outre :
la réception des informations de profil de confidentialité de l'UE cible en provenance d'une Gestion Unifiée des Données, UDM ;
dans lequel les informations de profil de confidentialité de l'UE cible sont identifiées à l'aide d'au moins l'un des éléments suivants : un Identifiant d'Abonnement Public Générique, GPSI, de l'UE cible ; ou un Identifiant Permanent d'Abonné, SUPI, de l'UE cible.

6. Procédé de transmission d'informations, exécuté par une Gestion Unifiée des Données, UDM, comprenant :
le stockage (501) d'informations de profil de confidentialité d'un Équipement Utilisateur cible, UE, dans lequel les informations de profil de confidentialité sont configurées pour déterminer s'il faut autoriser la télémétrie coopérative à être effectuée sur l'UE cible ;
**caractérisé en ce que** les informations de profil de confidentialité comprennent :
une indication de confidentialité de télémétrie coopérative, configurée pour indiquer s'il faut autoriser la télémétrie coopérative à être effectuée sur l'UE cible ;
dans lequel les informations de profil de confidentialité sont en outre configurées pour indiquer une exigence de mesure pour effectuer la télémétrie coopérative.

7. Procédé selon la revendication 6, comprenant en outre :
l'envoi, sur la base d'une demande d'un Serveur de Télémétrie, RS, des informations de profil de confidentialité de l'UE cible au RS.

8. Procédé selon la revendication 6 ou 7, comprenant en outre :
la mise à jour, sur la base d'informations de mise à jour de l'UE cible, des informations de profil de confidentialité ;
dans lequel les informations de mise à jour sont au moins configurées pour mettre à jour l'indication de confidentialité de télémétrie coopérative dans les informations de profil de confidentialité.

9. Procédé de transmission d'informations, exécuté par un Équipement Utilisateur, UE, comprenant :
la détermination (601), sur la base d'une demande de confidentialité de l'UE, d'informations de profil de confidentialité de l'UE, dans lequel les informations de profil de confidentialité sont configurées pour déterminer s'il faut autoriser la télémétrie coopérative à être effectuée sur l'UE ;
**caractérisé en ce que** les informations de profil de confidentialité comprennent : une indication de confidentialité de télémétrie coopérative, configurée pour indiquer s'il faut autoriser la télémétrie coopérative à être effectuée sur l'UE ;
dans lequel les informations de profil de confidentialité sont en outre configurées pour indiquer une exigence de mesure pour effectuer la télémétrie coopérative.

10. Procédé selon la revendication 9, comprenant en outre :
l'envoi d'informations de mise à jour à un réseau central, dans lequel les informations de mise à jour sont configurées pour mettre à jour les informations de profil de confidentialité stockées par une Gestion Unifiée des Données, UDM ;
dans lequel les informations de mise à jour sont au moins configurées pour mettre à jour l'indication de confidentialité de télémétrie coopérative dans les informations de profil de confidentialité ;
de préférence, l'envoi d'un message de Strate Non Accès, NAS, portant les informations de mise à jour.

11. Procédé selon la revendication 9 ou 10, dans lequel, en réponse au fait que l'UE est un terminal de demande de télémétrie, le procédé comprend en outre :
l'envoi d'une demande de télémétrie coopérative pour un UE cible à un serveur de télémétrie, dans lequel la demande de télémétrie coopérative est configurée pour indiquer une demande de mesure pour effectuer la télémétrie coopérative.

12. Appareil de télémétrie coopérative, comprenant :
un premier module de réception (110), configuré pour recevoir une demande de télémétrie coopérative envoyée par un terminal de demande de télémétrie, dans lequel la demande de télémétrie coopérative demande que la télémétrie coopérative soit effectuée sur un Équipement Utilisateur cible, UE ; et
un premier module de détermination (120), configuré pour déterminer s'il faut effectuer la télémétrie coopérative au moins selon des informations de profil de confidentialité de l'UE cible ;
**caractérisé en ce que** les informations de profil de confidentialité comprennent : une indication de confidentialité de télémétrie coopérative, configurée pour indiquer s'il faut autoriser la télémétrie coopérative à être effectuée sur l'UE cible ;
dans lequel les informations de profil de confidentialité sont en outre configurées pour indiquer une exigence de mesure pour effectuer la télémétrie coopérative.

13. Appareil de transmission d'informations, comprenant :
un module de stockage (210), configuré pour stocker des informations de profil de confidentialité d'un Équipement Utilisateur cible, UE, dans lequel les informations de profil de confidentialité sont configurées pour déterminer s'il faut autoriser la télémétrie coopérative à être effectuée sur l'UE cible ;
**caractérisé en ce que** les informations de profil de confidentialité comprennent :
une indication de confidentialité de télémétrie coopérative, configurée pour indiquer s'il faut autoriser la télémétrie coopérative à être effectuée sur l'UE cible ;
dans lequel les informations de profil de confidentialité sont en outre configurées pour indiquer une exigence de mesure pour effectuer la télémétrie coopérative.

14. Appareil de transmission d'informations, comprenant :
un deuxième module de détermination (310), configuré pour déterminer, sur la base d'une demande de confidentialité d'un équipement utilisateur, UE, des informations de profil de confidentialité de l'UE, dans lequel les informations de profil de confidentialité sont configurées pour déterminer s'il faut autoriser la télémétrie coopérative à être effectuée sur l'UE ;
**caractérisé en ce que** les informations de profil de confidentialité comprennent :
une indication de confidentialité de télémétrie coopérative, configurée pour indiquer s'il faut autoriser la télémétrie coopérative à être effectuée sur l'UE ;
dans lequel les informations de profil de confidentialité sont en outre configurées pour indiquer une exigence de mesure pour effectuer la télémétrie coopérative.
